# EUROPÄISCHE PATENTANMELDUNG

(11) **EP 0 903 170 A1**
(43) Veröffentlichungstag der Anmeldung: **24.03.1999**
(21) Anmeldenummer: 98117315.6
(22) Anmeldetag: 12.09.1998
(51) Int. Cl.: B01D 29/25, E04D 13/08

(54) **Trenn- und Abscheidevorrichtung**

(30) Priorität: 17.09.1997 DE 29716642 U
(71) Anmelder: Winkler, Norbert, D-63699 Kefenrod (DE)
(72) Erfinder: Winkler, Norbert, D-63699 Kefenrod (DE)
(74) Vertreter: Müller-Wolff, Thomas, Dipl.-Ing.

(57) **Zusammenfassung**

Die Erfindung betrifft eine Trenn- und Abscheidevorrichtung für flüssige Medien, bestehend aus Zulauf- 1, Ablauf- 2 und Trenneinrichtung 3 wobei in der Trenneinrichtung 3 in Strömungsrichtung des flüssigen Mediums gesehen eine Benetzungs- und eine Abspreizzone ausgebildet ist, wobei die Benetzungszone eine Einlaufdüse 5, einen oberen Siebwandabschnitt 11 und einen mittleren Siebwandabschnitt 12 mit einer Andrückfläche 10 umfaßt, während die Abspreizzone aus einem unteren Siebwand-abschnitt 13 und einem konisch ausgebildeten Stauraum 16 besteht, wobei die Außenwand des Stauraumes 16 von einem nach unten aufgeweiteten Zylindermantel und einem Bodenring 8 gebildet wird.

## Beschreibung

Die Erfindung betrifft eine Trenn- und Abscheidevorrichtung für flüssige Medien, bestehend aus Zulauf-, Ablauf- und Trenneinrichtung.

Aus dem deutschen Gebrauchsmuster DE 297 04 831 U1 ist ein Standrohr-Filtersammler bekannt, der einen von einem doppelwandigen Zylinder gebildeten Stauraum enthält, dessen Außenwand in die Wandung des Gehäusetopfes übergeht und dessen Innenwand zumindest bis an die Erdoberfläche reicht. Ein Ausflußstutzen ist am unteren Ende des Stauraumes rechtwinklig zur Rohrachse des Standrohr-Filtersammlers angeordnet.

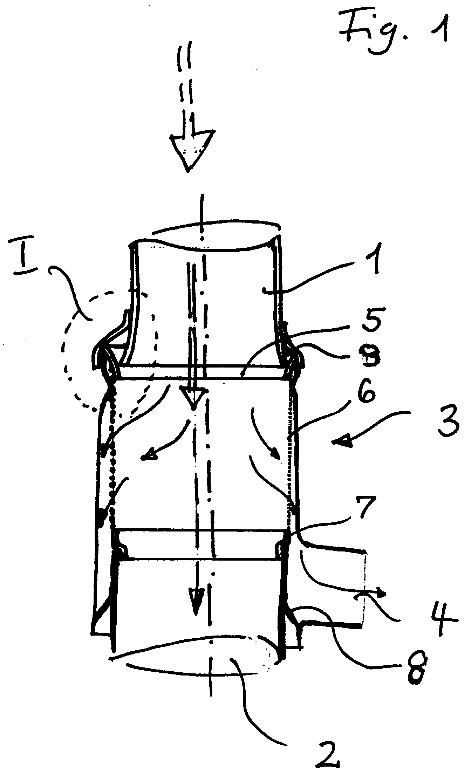

Gemäß der in Figur 1 des Gebrauchsmusters dargestellten Einzelheit A mündet hier einströmendes Regenwasser über ein Fallrohr in einen Einlaßstutzen und gelangt von dort in ein konisches Stützrohr.

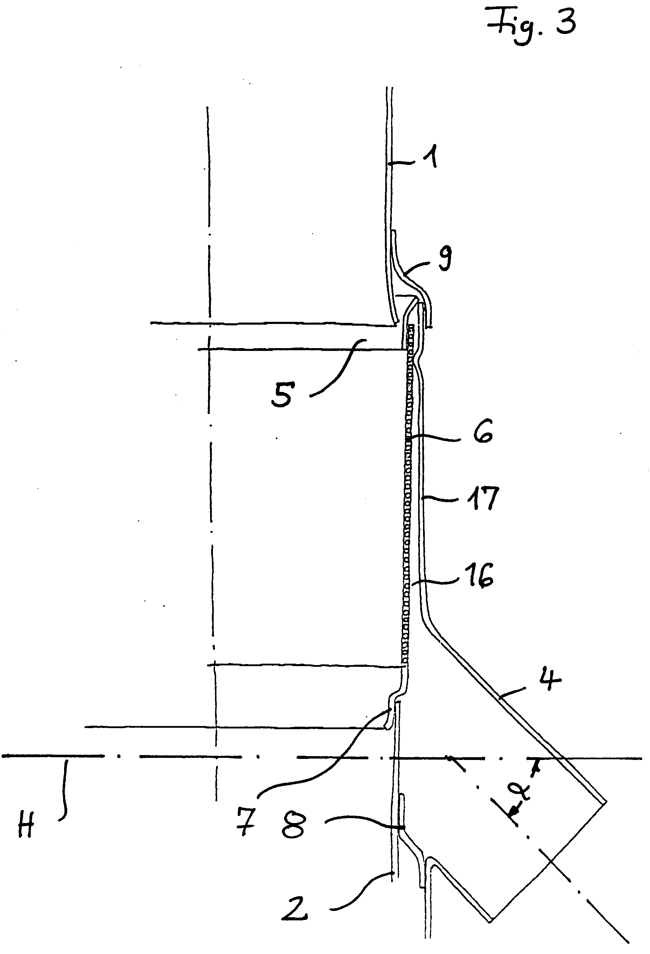

Im Mittelteil des Filtersammlers befindet sich eine Siebeinrichtung, die den Reinwasseranteil vom Regenwasser trennt und über einen Abweiskragen in einen Sammelbehälter gemäß Figur 3 entleert. Dieser Abweiskragen erlaubt auch bei einem Rückstau ein Zurückfließen des Reinwassers in das Fallrohr, so daß bei erheblich anfallender Wassermenge die Effizienz der bekannten Siebeinrichtung absinkt.

Aufgabe der vorliegenden Erfindung ist es, eine neue Trenn- und Abscheidevorrichtung für flüssige Medien derart auszubilden, daß auch bei unterschiedlich anfallender Wassermenge eine effiziente Abtrennung mit möglichst einfachen Mitteln erreicht wird.

Diese Aufgabe wird erfindungsgemäß durch die in den Ansprüchen angegebenen Merkmale gelöst. Es hat sich gezeigt, daß durch die Ausbildung der Trenn- und Abscheidevorrichtung in einen Benetzungsbereich und in einen Spreiz- und Trennbereich der Wirkungsgrad erheblich verbessert werden kann, wenn der Ausflußstutzen am unteren Ende des Stauraums schwenkbar angeordnet ist.

Im folgenden wird die Erfindung anhand eines Ausführungsbeispieles näher erläutert. Es zeigen:
- Fig. 1: Gesamtansicht der erfindungsgemäßen Trenn- und Abscheidevorrichtung;
- Fig. 2: Detailausschnitt im Bereich I der Trenneinrichtung nach Figur 1;
- Fig. 3: Teilansicht nach Figur 1 mit einem abgewinkelten Ausflußstutzen.

In Figur 1 ist ein Zulaufrohr 1, ein Ablaufrohr 2 und eine Trenneinrichtung 3 teilweise geschnitten dargestellt. Das flüssige Medium wird in Pfeilrichtung von oben nach unten durch die erfindungsgemäße Trenn- und Abscheidevorrichtung hindurch geleitet, wobei das Reinwasser über den Ausflußstutzen 4 die Vorrichtung verläßt.

Unterhalb der Zulaufeinrichtung 1 befindet sich eine Ringdüse 5, die mit einem konusförmig aufgeweiteten Oberteil auf der Außenwand der Trenneinrichtung 3 aufliegt.

An dem sich verjüngenden Austrittsteil der Ringdüse 5 schließt sich eine Siebwand 6 an, die bis kurz oberhalb der Ablaufeinrichtung 2 in einem Siebstützring 7 endet.

Die Lage des Endpunktes der Siebfläche 6 wird durch die Position des Siebstützringes 7 bestimmt, dessen Lage auch in bezug auf den Ausflußstutzen 4 für die aufzustauende Reinwassermenge bedeutsam ist. Im allgemeinen befindet sich der Siebstützring 7 etwa in Höhe der Oberkante des Ausflußstutzens, wobei sich ein Stauraum zwischen der Siebwand 6, der gegenüberliegenden Außenwand der Trenneinrichtung 3 und einem Bodenring 8 ausbildet.

Dieser Bodenring 8 verbindet den Außenmantel der Trenneinrichtung 7 mit der Außenfläche der Ablaufeinrichtung 2.

Nach oben hin wird der Abschluß zwischen Zulaufeinrichtung 1 und Trenneinrichtung 3 über eine Ringmanschette 9 gebildet. Diese Ringmanschette ist derart ausgebildet, daß sie dichtend aber gleichzeitig auch verschiebbar über die Zulaufeinrichtung 1 herumgreift, wobei erforderlichenfalls durch geeignete Maßnahmen auch eine lösbare Fixierung angebracht werden kann.

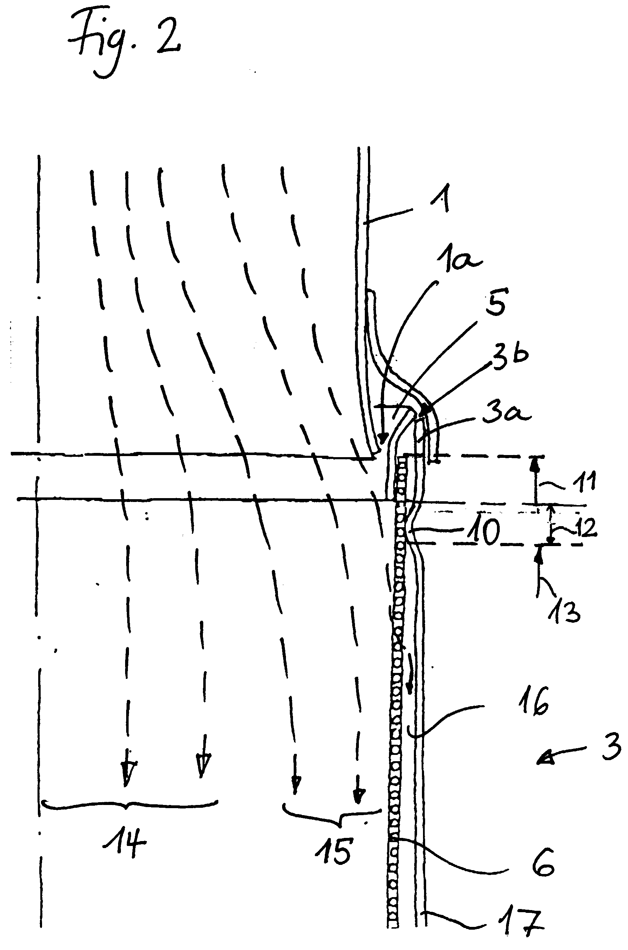

In Figur 2 ist das Detail I aus Figur 1 in vergrößerter Darstellung gezeigt. Man erkennt die Zulaufeinrichtung 1, die Trenneinrichtung 3 und die Ringdüse 5, die sich auf dem Außenmantel 3a der Trenneinrichtung 3 unter Bildung einer Spaltöffnung 3b abstützt.

Wichtig ist, daß zwischen Ringdüse 5 und Zulaufeinrichtung 1 ein Einlaufspalt 1a vorhanden ist. Dieser sorgt beim Betrieb der Trenn- und Abscheidevorrichtung für einen Unterdruck, der sich bei dem nachfolgend erläuterten Benetzungs- und Abspreizvorgang wie folgt auswirkt:

Die Benetzungszone wird gebildet durch den oberen Siebwandabschnitt 11 und den mittleren Siebwandabschnitt 12, der nach unten hin durch eine Einschnürung 10 des Außenmantels 3a, die an der Siebwand 6 anliegt, begrenzt wird.

Wie die gestrichelten Linien in Figur 2 zeigen, wird das durch den Zulauf 1 hindurchgeleitete Medium im mittleren Siebwandabschnitt 12 verstärkt in Richtung auf die Siebwand 6 zubewegt. Diese Bewegung wird von dem im Einlaufspalt 1a erzeugten Unterdruck unterstützt, der für eine Benetzung der Siebwandoberfläche sorgt.

Unterhalb der Einschnürung 10 beginnt die Abspreizzone 13, in der das aus einem Innenbereich 14 der Trenneinrichtung 3 in den Außenbereich 15 abgelenkte, die Oberfläche der Siebeinrichtung 6 benetzende Fluidum durch die Öffnungen in der Siebwand 6 hindurchtritt. Je nach Ausprägung der Spreizkraft kann der Übertritt des Fluidums vom Innenbereich 14 der Trenneinrichtung 3 in den Raum hinter der Siebwand 6, im nachfolgenden Stauraum 16 genannt, nach oben oder unten verschoben werden.

Bei großer Regenwassermenge entwickelt sich eine starke Spreizkraftwirkung, die das Fluidum aus dem Innenbereich 14 an der Unterkante der Ringdüse 5 in den Außenbereich 15 umlenkt. In der Folge tritt das gereinigte Fluidum unterhalb der Einschnürung 10 durch die Siebeinrichtung 6 hindurch, so daß ein großer Stauraum 16 zur Verfügung steht. Bei geringer Regenwassermenge wird nur ein kleiner Stauraum benötigt, so daß der Übertritt des Fluidums durch die Siebwand an einem tiefer gelegenen Abschnitt erfolgen kann. Somit konnte die Funktionsweise einer selbstregulierenden Trenn- und Abscheidevorrichtung anhand dieses Ausführungsbeispieles verwirklicht werden.

Die Variabilität des Stauraums 16 kann noch dadurch erhöht werden, daß der Abflußstutzen 4 um einen Winkel α von 0 - 90° zur Horizontalen H schwenkbar ist. Somit vergrößert sich das nutzbare Stauraumvolumen, wenn der Abflußstutzen 4 beispiels-weise in einem Winkel von 45 angebracht ist und der Durchfluß-widerstand erheblich verringert wird. Dies führt gerade bei Regengüssen zu einer schnellen Wasserableitung und vermindert somit die Gefahr eines Rückstaus.

Als Folge dieser günstigen konstruktiven Gestaltung der mehrteiligen Trenn- und Abscheidevorrichtung können die Festigkeitsanforderungen herabgesetzt werden, da die auftretenden Maximalbelastungen reduziert wurden. Es ist nun möglich, die Stützwand 17 der Trenneinrichtung einteilig auszuführen, so daß eine kompliziert und aufwendig zu fertigende doppelwandige Ausbildung der Trenneinrichtung entfällt.

Eine einwandige Ausführung der Trenneinrichtung, wie sie beispielsweise in Figur 3 im Halblängsschnitt dargestellt ist, ermöglicht ferner eine leichtere Reinigung der Siebwand 6. Die Siebwand 6 ist im bedarfsfalle zu Reinigungszwecken leicht von außen zugänglich, so daß sich anhaftende Verschmutzungen ohne größeren Montageaufwand bequem entfernen lassen.

Eine verbesserte Reinigung der Siebwand 6 verlängert auch die Lebensdauer der Trenn- und Abscheidevorrichtung erheblich. Darüber hinaus wird der Wirkungsgrad verbessert - bezogen auf die Gesamteinsatzzeit der Trenn- und Abscheidevorrichtung.

Eine zusätzliche Verbesserung des Wirkungsgrades wurde auch durch die Neigung des Ausflußstutzens 4 um den Winkel α zur Horizontalen erreicht. Es konnte nämlich dadurch die Wirkung der Schwerkraft auf das gereinigte Fluidum vergrößert werden, wodurch sich die Spreizkraftwirkung an der Siebwand 6 verstärkt. Mit der erfindungsgemäßen Trenn- und Abscheidevorrichtung lassen sich Wirkungsgrade von bis zu 98% bezogen auf die theoretisch abtrennbare Flüssigkeitsmenge erreichen.

## Patentansprüche

1. Trenn- und Abscheidevorrichtung für flüssige Medien, bestehend aus Zulauf- (1), Ablauf- (2) und Trenneinrichtung (3),
dadurch gekennzeichnet,
daß in der Trenneinrichtung (3) in Strömungsrichtung des flüssigen Mediums gesehen eine Benetzungs- und eine Abspreizzone ausgebildet ist, wobei die Benetzungszone eine Einlaufdüse (5), einen oberen Siebwandabschnitt (11) und einen mittleren Siebwandabschnitt (12) mit einer Andrückfläche (10) umfaßt, während die Abspreizzone aus einem unteren Siebwandabschnitt (13) und einem konisch ausgebildeten Stauraum (16) besteht, wobei die Außenwand des Stauraumes (16) von einem nach unten aufgeweiteten Zylindermantel und einem Bodenring (8) gebildet wird.

2. Trenn- und Abscheidevorrichtung nach Anspruch 1,
dadurch gekennzeichnet,
daß der Stauraum (16) an seinem oberen Ende über die Andrückfläche (10) abgedichtet ist.

3. Trenn- und Abscheidevorrichtung nach einem der vorhergehenden Ansprüche,
dadurch gekennzeichnet,
daß am unteren Ende des Stauraums (16) ein Ausflußstutzen (4) in einem Winkel α von 0 - 90° zur Horizontalen angeordnet ist.

4. Trenn- und Abscheidevorrichtung nach einem der vorhergehenden Ansprüche,
dadurch gekennzeichnet,
daß die Außenwand des Stauraums (16) gleichzeitig die Außenwand der Trenn- und Abscheidevorrichtung für die flüssigen Medien bildet.
